(19) Europäisches Patentamt
European Patent Office
Office européen des brevets

(11) **EP 2 133 822 A1**

(12) **EUROPEAN PATENT APPLICATION**

(43) Date of publication:
**16.12.2009 Bulletin 2009/51**

(51) Int Cl.:
**G06K 9/62** *(2006.01)* **A01G 23/00** *(2006.01)*
**G06Q 10/00** *(2006.01)* **G06N 5/00** *(2006.01)*

(21) Application number: **08158280.1**

(22) Date of filing: **13.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **UNIVERSITY COLLEGE CORK**
**Cork,**
**County Cork (IE)**

(72) Inventors:
• **Nugent, Conor**
**County Dublin (IE)**
• **Bridge, Derek**
**Cork (IE)**

(74) Representative: **Catesby, Olivia Joanne et al**
**Tomkins & Co**
**5 Dartmouth Road**
**Dublin 6 (IE)**

(54) **A method of stem taper, volume and product breakout prediction**

(57) A case-based reasoning method for predicting a complete stem profile of a tree, volume of a tree stem, and/or estimating the product breakout of a tree stem, wherein only partial stem measurements for said tree are available. The method comprises: providing a case base of measured tree stem profiles, said case base comprising a set of reading heights and a corresponding set of stem diameter readings for each measured stem, using the results of a scan of at least part of the stem of said query tree to create at least one query data case, determining the similarity between the at least one query data case and each stem profile in the case base, and selecting at least one stem profile from the case base based on its similarity with the at least one query data case, and using same to make the prediction/estimation.

FIG. 3

EP 2 133 822 A1

**Description**

**Field of the Invention**

The present invention relates to forest inventory systems. In particular the present invention provides a method of predicting stem taper, volume and product breakout on a tree-by-tree basis.

**Background to the Invention**

In forestry, determining the volume of timber in a harvesting site and the products that could potentially be produced from that timber is of great importance. The accuracy of such information is critical to ensure effective harvesting and planning.

Forest planners are responsible for how the set of forests commercially cultivated under their control should be developed and eventually harvested. At any given time, there are a number of different forests available for use and planning how best to utilise them can be a difficult task. Many poor decisions made in this planning process are not necessarily due to poor judgement but due to poor information at the root of the supply-chain, the forest. In the vast majority of cases the quality and characteristics of a forest are only vaguely known. This means that resources that have been cultivated over periods of thirty to over a hundred years are often underutilised based on ill-informed decisions made quickly at the end of their life cycles. These poor decisions and the lack of quality forest information naturally have knock effects right through the supply-chain. The lack of certainty of supply, means that many sawmills, in order to ensure they meet their customers' needs are forced to engage in practices that further compound the value losses in the supply-chain.

Various automated processes have been developed to overcome disadvantages with traditional forestry inventory techniques wherein manual field observations would have been conducted, for example by taking manual measurements of individual trees or sampling wherein a survey is carried out in a sample area and the results generalized across a larger area.

Many existing timber inventory methods utilize remotely sensed data, obtained from aircraft, satellite or other means above ground height. Such remotely sensed data may be in the form of aerial photographs or satellite images.

US 7,212,670B1 discloses one such method wherein aerial digital images of forests are analysed by extracting crown shapes of trees in the images and using these to determine tree species, diameter at breast height and volume information both on the tree stand level and on the individual tree level.

Unreliability with automated digital image classification and analysis lead to the development of systems for determining tree attributes using data collected from aerial laser scans.

US 7,013,235B2 discloses one such method wherein a laser scanner is used above the measured trees to determine tree diameters and heights. Measurements taken over time are utilized to determine the growth of trees.

US2007/0291994A1 discloses a forest inventory method which uses both remotely sensed digital imaging, and sampled and measured ground data.

US2008/0046184A1 discloses a method of processing remotely sensed aerial forest data and using ground plots and mathematical models to extrapolate the data to create a forest inventory estimate.

The majority of the above prior art automated methods use techniques which are based at tree stand level rather than recording data on a tree by tree basis.

However, tree by tree techniques are still used, wherein traditional forestry measurements systems are used in combination with mathematical modelling to analyse forests.

The expected volume of a forest is usually predicted by taking a set of field measurements and details about its history and using these to index fixed tables which translate these readings into volume figures. The set of tables are indexed based on a calculated parameter called the yield class. A survey of the forest is conducted and typically the diameter at breast height (DBH) for a number of sample trees along with some tree heights are recorded. These measurements are used to determine the yield class of the forest. The set of tables are then indexed by the yield class, the forest age and maybe the thinning strategy to give a prediction of the expected volume and saw-log proportions of the forest. Such tables are compiled based on extensive and detailed field measurements and mathematical models.

An alternative strategy is to use taper equations on an individual stem by stem basis. Most approaches to taper equations use different geometrical principles and simple mathematical functions. The vast majority of these systems predict stem curves using fixed measurements, usually just the DBH and the height of the tree. The model is calibrated using historical data based on these input parameters which are fixed in advance. In many cases the tree height might be derived from the DBH measurement using a height model. With full taper predictions for each individual sample stem it is then possible to calculate the volume of each stem and the possible products produced from it.

Both the table and the taper based approaches are usually complied for each tree species and on a region by region basis. Each approach gives crude predictions which while broadly accurate on regional basis can often be poor on a forest by forest or stem by stem basis.

In order to fill this information gap and mitigate the aforementioned supply-chain value losses, TreeMetrics developed a 3D terrestrial laser scanning technology.

Their technology makes it possible to capture three dimensional measurement data about standing trees in a forest prior to harvesting. In reality this means that for each individual tree in a scanned plot there might be hundreds of diameter readings taken at fixed intervals along its length. For each diameter the centre point is also captured and so curvature information about the tree is also recorded. Such information makes it possible to accurately determine the quality, volume and product potential of a forest in advance of it being harvested. It is now possible to more accurately estimate the value of a forest and determine what it is best suited for. This information greatly enhances a forest planners ability to better utilise the resources at their disposal.

Although TreeMetrics' technology provides vastly more stem information than traditional approaches, it is not guaranteed to provide a complete picture of each tree. Diameter readings for some sections of tree may be missing due to occlusion by branches or other trees. This problem is increasingly common the further up the tree the readings are sought due to the effects of branching and the limitations of the laser at increased distances. This leaves a stem profile prediction task both in terms of interpolating the missing sections and also in terms of extrapolation of the upper reaches of a tree. There is also the task of smoothing or replacing diameter readings which contain noise.

**Summary of the Invention**

Accordingly, the present invention provides a case-based reasoning method for predicting a complete stem profile of a tree wherein only partial stem measurements for said tree are available, the method comprising the steps of:

> providing a case base of measured tree stem profiles, said case base comprising a set of reading heights and a corresponding set of stem diameter readings for each measured stem,
> using the results of a scan of at least part of the stem of said query tree to create at least one query data case,
> determining the similarity between the at least one query data case and each stem profile in the case base, and
> selecting at least one stem profile from the case base based on its similarity with the at least one query data case to predict the complete stem profile of the query tree.

The invention further provides a case-based reasoning method for predicting the volume of a tree stem wherein only partial stem measurements for said tree are available, the method comprising the steps of:

> providing a case base of measured tree stem profiles, said case base comprising a set of reading heights and a corresponding set of stem diameter readings for each measured stem,
> using the results of a scan of at least part of the stem of said tree to create at least one query data case,
> determining the similarity between the at least one query data case and each stem profile in the case base, and
> selecting at least one stem profile based on its similarity with the at least one query data case,
> calculating the volume of each stem profile selected and
> using same to predict the volume of the query tree stem.

Preferably the method further comprises calculating the mean volume of the selected stem profiles and using same as the predicted volume of the query tree stem.

The method may alternatively comprise the steps of:

> adding a weighting to each volume based on the level of the stem profile's similarity with the at least one query test case;
> calculating the mean weighted volume of the selected stem profiles
> and using same as the predicted volume of the query tree stem.

The method may further comprising attaching a confidence interval to the predicted volume of the query tree stem.

In accordance with a third aspect of the invention there is provided a case-based reasoning method for estimating the product breakout of a tree stem wherein only partial stem measurements for said tree are available, the method comprising the steps of:

> providing a case base of measured tree stem profiles, said case base comprising a set of reading heights and a corresponding set of stem diameter readings for each measured stem,
> using the results of a scan of at least part of the stem of said tree to create at least one query data case,

determining the similarity between the at least one query data case and each stem profile in the case base, and selecting at least one stem profile based on its similarity with the at least one query data case,
applying a cross-cutting algorithm to each selected stem profile to calculate the volume of each type of desired product, and
using same to estimate the product breakout of the query stem.

Preferably the product breakout of the query stem of each product desired is estimated as

$$ pv_i^q = \frac{\sum_{n=1}^{k} w_n pv_i^n}{\sum_{n=1}^{k} w_n} $$

Where $pv_i^q$ is the predicted product volume for the query, $q$, of product $i$ and $pv_i^n$ is the volume of product $i$ in the $n^{th}$ most similar stem profile selected from the case base. The weight of each of the selected stem profiles, $w_n$, is calculated based on their similarity to the query.

A confidence interval may be attached to the estimated product breakout.

The data in the case base may have been obtained using manual or harvester measurements, or alternatively may come from aerial data.

The results of a scan are preferably the results of a three-dimensional scan. The results may be the results of a laser scan, such as but not limited to the type used by TreeMetrics.

As one alternative, the results of may be the results of an aerial scan, although the results may be obtained by any scanning means. A combination of scanning means may also be used, for example the scan results may be provided by a 3D laser scan and by an aerial scan.

In each of the above methods of the invention, the step of determining the similarity preferably uses an asymmetrical sequence based Euclidean similarity measure.

Preferably the asymmetrical sequence based Euclidean similarity measure uses a $k$ Nearest Neighbour retrieval algorithm, which may comprise :

selecting $k$ cases representing $k$ nearest neighbours, and
amalgamating the $k$ cases into a single solution.

A reliability weighting may be attached to each result of the scan.

The query case data may be represented as:

$$ \{X = x_1, .... x_n, W = w_1, ..., w_n, I_Q = i_1, ..., i_n\}, $$

wherein $X$ is a set of readings $x$ from the scan results, $I_Q$ is set of heights $i$ at which the readings were taken, and $W$ is a set of reliability factors $w$ attached to said readings.

The case base data may be represented as:

$$ \{Y = x_1, .... x_k, I_C = i_1, ..., i_k\} $$

where Y is the set of stem diameter readings, and $I_c$ is the set of heights at which the stem diameter readings were taken.

The asymmetrical sequence based Euclidean similarity measure used in the methods of the present invention may be defined by:

$$ASES\left([X,W,I_Q],[Y,I_C]\right) = \sqrt{\frac{sum_{i=0}^{n}\left(w_i \times Diff\left(x_i,Y,I_{Qi},I_C\right)\right)}{sum_{i=0}^{n} w_i}} \qquad (2)$$

where

$$Diff\left(x_i,Y,I_{Qi},I_C\right) = \begin{cases} x_i^2 & \text{if } I_{Qi} \notin I_C \\ (x_i - y_j)^2 & \text{otherwise} \end{cases} \qquad (3)$$

and where $y_j$ is the point in $Y$ that corresponds to height $I_{qi}$.

According to one embodiment of the present invention, the case base may further comprise information on the height of each stem. The case base may comprise location characteristics of stems contained therein and/or stand history information.

The step of selecting at least one stem profile may therefore take into account similarities in the heights of the query stem and the heights of stems in the case base.

Likewise, the step of selecting at least one stem profile may take into account similarities in the location characteristics of the query stem and the location characteristics of stems in the case base.

Each of the aforementioned methods of the present invention may further comprise the steps of:

validating the proposed solution to achieve a confirmed solution; and
adding the confirmed solution to the case base.

The present invention further provides a computer system arranged to implement one or more of the aforementioned case-based reasoning methods. The present invention also extends to a computer program comprising program instructions for causing a computer to perform one of more of said methods.

The present invention further provides a computer implemented system for predicting a complete stem profile of a tree wherein only partial stem measurements for said tree are available, comprising:

means for providing a case base of measured tree stem profiles, said case base comprising a set of reading heights and a corresponding set of stem diameter readings for each measured stem,
means for using the results of a scan of at least part of the stem of said query tree to create at least one query data case,
means for determining the similarity between the at least one query data case and each stem profile in the case base, and
means for selecting at least one stem profile from the case base based on its similarity with the at least one query data case to predict the complete stem profile of the query tree.

The present invention further provides a computer implemented system for predicting the volume of a tree stem wherein only partial stem measurements for said tree are available, the method comprising the steps of:

means for providing a case base of measured tree stem profiles, said case base comprising a set of reading heights and a corresponding set of stem diameter readings for each measured stem,
means for using the results of a scan of at least part of the stem of said tree to create at least one query data case,
means for determining the similarity between the at least one query data case and each stem profile in the case base, and
means for selecting at least one stem profile based on its similarity with the at least one query data case,
means for calculating the volume of each selected stem profile and
means for using same to predict the volume of the query tree stem.

The present invention further provides a computer implemented system for estimating the product breakout of a tree stem wherein only partial stem measurements for said tree are available, the method comprising the steps of:

means for providing a case base of measured tree stem profiles, said case base comprising a set of reading heights and a corresponding set of stem diameter readings for each measured stem,
means for using the results of a scan of at least part of the stem of said tree to create at least one query data case,
means for determining the similarity between the at least one query data case and each stem profile in the case base, and
means for selecting at least one stem profile based on its similarity with the at least one query data case,
means for applying a cross-cutting algorithm to each selected stem profile to calculate the volume of each type of desired product, and
means for using same to estimate the product breakout of the query stem.

The present invention outlines a Case-based Reasoning approach which accomplishes the following tasks:

- a stem profile prediction task both in terms of interpolating missing sections of tree (missing due to occlusion by branches or other trees, which is increasingly common the further up the tree the readings are sought due to the effects of branching and the limitations of the laser at increased distances) and also in terms of extrapolation of the upper reaches of a tree; and

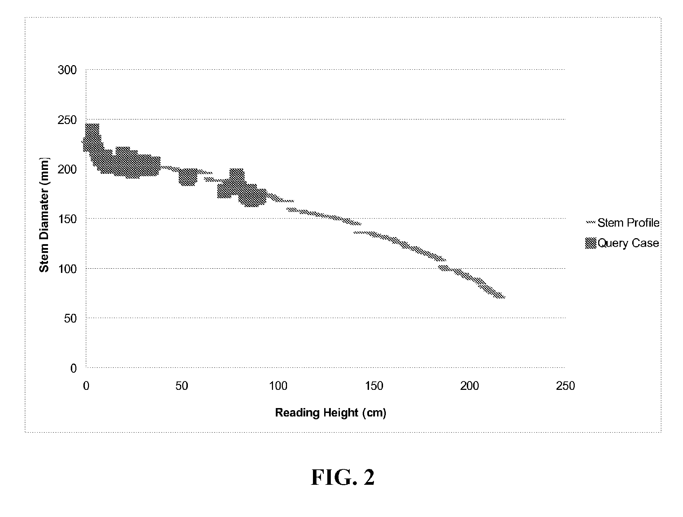

- the task of smoothing or replacing diameter readings which contain noise (as is clear in Figure 2), although technology such as terrestrial scanning can give a generally accurate impression of a stem profile the stem diameters captured by the device can sometimes contain noise. The Case-base Reasoning approach of this invention provides a means of smoothing noisy diameter readings with realistic values through the stem profile prediction task.

## Brief Description of the Drawings

The invention will be more clearly understood from the following description of an embodiment thereof, given by way of example only, with reference to the accompanying drawings, in which:-

Figure 1 shows a typical Case Base Reasoning cycle.
Figure 2 shows a comparison of sample data in a query case to which the method of the invention is applied with that of actual stem readings.
Figure 3 is a flow diagram showing the various steps of the methods of the present invention.

## Detailed Description of the Drawings

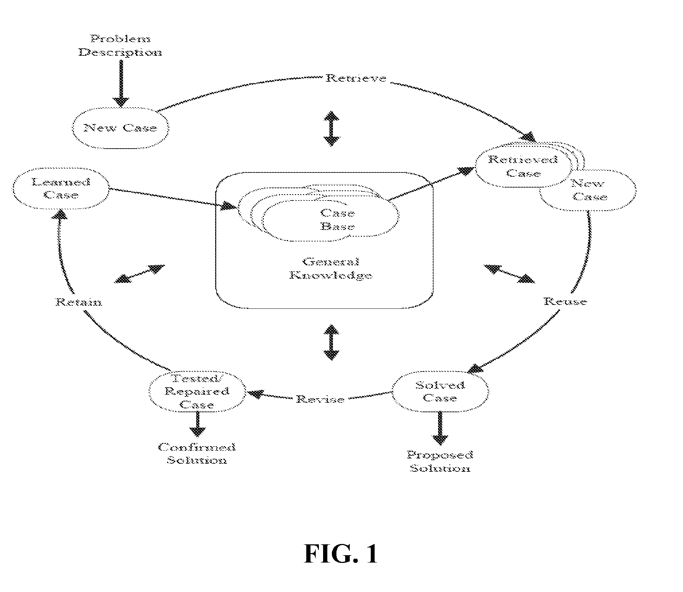

The present invention provides a novel Case-based Reasoning approach to the objective problem which operates on a stem-by-stem basis and that is distinctly different to traditional methods commonly employed in forestry. The approach of the present invention is extremely flexible and can utilise the extra stem profile information available from terrestrial forest scanning technologies such as that developed by TreeMetrics. The described herein techniques are also applicable to conventional forest survey sources. The Case-based Reasoning approach of the present invention has a number of distinct advantages as a taper, volume and product recovery prediction mechanism.
The method of the present invention utilises a Case Based Reasoning (CBR) methodology. Prior to discussing the invention in detail, CBR will be briefly introduced. The CBR methodology has a logical step-like structure that can be broken down into four distinct phases, often referred to as the 'Four REs' cycle. Figure 1 shows a diagram of this system.
**Retrieval:** To begin with, the case-base is searched and the most similar cases to present problem description are sought out and retrieved.
**Reuse:** The retrieved cases are then used to generate a solution to the presented problem description.
**Revision:** The proposed solution is evaluated and validated.
**Retention:** Once a satisfactory solution has been reached the problem description and solution are then added to the case-base.

## Retrieval

The retrieval stage is important as so much is dependent on finding a good set of cases given the problem case. Indexed-based retrieval using database methods may be used to this effect but the method most commonly used in classification tasks is the $k$ Nearest Neighbours (k-NN) retrieval algorithm. In the k-NN algorithm a case representing the present problem is compared with each case in the case-base and a similarity score is calculated. The similarity score calculated for two cases is based on the amalgamation of the similarities scores for each of the features that describe a case. Local similarity (similarities between features) scores can be calculated using simple functions such as the Euclidean distance in the case of real-values features or exact match criteria for nominal features. However, more sophisticated measures are commonly used.

Some similarity measures that are of particular relevance to the objective are those used for time series and shape data. Once a satisfactory set of local similarity measures have been decided they can be used in the amalgamation function to define the overall similarity between two cases. Similarity between two cases Q and C is usually defined as the sum of the local similarity values multiplied by their relative importance:

$$Sim(Q,C) = \sum_{f \in F} w_f \times \sigma_f \qquad (1)$$

where $\sigma_f$ is the local similarity function for feature f and $w_f$ reflects its weight (or importance). F is the set of all features in Q. Again the determination of what weight to attach to each feature is a very important issue. The k-NN algorithm is very sensitive to the presence of irrelevant or noisy features.

Finding a good set of feature weights can greatly improves the performance of the CBR system.

**Reuse**

After the retrieval phase the CBR system is left with one case or more from which to derive the solution. In the case of classification tasks , typically either the most similar case's solution is used or the majority solution found within a certain number of the most similar cases is used. When CBR is used in knowledge intensive domains the returned solutions are often more complex then a simple class label. A solution may constitute a set of actions to be taken or a set of ingredients to manufacture viable tablets. In these cases the solutions often have to be adapted to take into account differences in the problem specification and this can be a complex task. It often requires considerable domain knowledge in order to perform the adaptation process and information may not be easily encoded in weak-theory domains.

**Revision**

CBR systems inevitably make mistakes and before any suggested solution is added to the case-base it is first validated. In this way the CBR system can fine tune and improve its performance in a real time learning scenario.

**Retention**

The retention phase involves updating the CBR system based on any feedback received, typically through the addition of a new case when the system has made an error but can also mean adjustments to other elements of the system such as altering the similarity measures. In some systems operating in complex domains the case representation that is added to the system can also include additional information on the outcome of the solution, which may also include fine-grained information on how well the solution addressed systems goals. Similarly other systems record more than just the result and record the problem solving process itself.

The CBR framework of the present invention is designed to deal with the particular characteristics of tree stem data and for the tasks of taper prediction, stem volume and product break-out estimation. The approach of the present invention also can be used to smooth out and remove noisy readings produced during the scanning process. Applying a CBR approach to these tasks has a number of clear advantages in comparison with traditional methods.

One such advantage is flexibility. As described above, traditional approaches are limited to making predictions based on fixed reading points such as the diameter at breast height. When more readings are available such systems aren't capable of capitalising on the extra information available and they can't be used to make predictions if that data they need isn't present. The CBR framework of the present invention can make predictions based on whatever set of readings are available due to especially constructed similarity measures. Data about tree height or location characteristics can also be added to similarity search process when such data is available.

A further advantage is localised and more accurate predictions. Many traditional models are calibrated to generalise over broad regions and cannot capture local variations. CBR is a localised approach which can use harvester or field measurements from that particular area thus implicitly capturing the local characteristics of that area.

Furthermore, there is no need for model calibration since the data is used directly and can be continuously updated. This means that product breakout and volume prediction can be given when yield tables are not available.

The case-base in the system of the present invention is made up of past measurements of entire tree stems.

These can come from either the harvester machines which record the profile of each tree they cut as they are operating or ideally from manual field measurements. A data on individual tree is typically made up of a sequence of real values which describe its diameter at each 10 cm interval along its length.

The query data in the method of the present invention preferably comes from the processed scanner readings of each tree. This data is often a fairly incomplete impression of the tree profile. Figure 2 shows the incomplete/partial profile of tree stem as recorded by a terrestrial scanning device (used as query data in the method of the present invention) as compared to a full and complete stem profile of a tree which could form case data in the case base used in the method of the present invention. The stem profile data could have been obtained from harvester readings, for example.

Both the stem profile (harvester) data and query case (scanner) data have some distinctive characteristics:

The data has the characteristics of sequence data or one dimensional time series data. Each data point has a definite relation to those either side of it and the data is effectively a description of a shape. There is a direct relation between the temporal element of time of series data and that of the concept of the height of each of the readings.

Furthermore, stems vary in height and the raw series data reflect this. Since each reading is taken at fixed intervals the length of each sequence varies from stem to stem. This means that simple vector based similarity measures cannot be used directly and alternative measures have to be used or designed.

Both the profile data which forms the case-base and the query data from the scanner can be incomplete sequences. However, they are incomplete in distinctly different ways. The harvester files contain continuous sequence data to a point but do not completely define the taper of each stem. The point or tree height at which the sequence terminates varies with each individual file.

The scanner data in contrast contains many missing sections of data due to occlusion from branches and other trees. These effects become more prominent further up the stem and as a result there is typically more information about the sequence at the base of the tree with fewer more and sparsely distributed readings further up the stem, as shown clearly in Figure 2.

Given that the stems that may have similar taper at their base can vary greatly in their upper taper these sparse but higher readings are of critical importance.

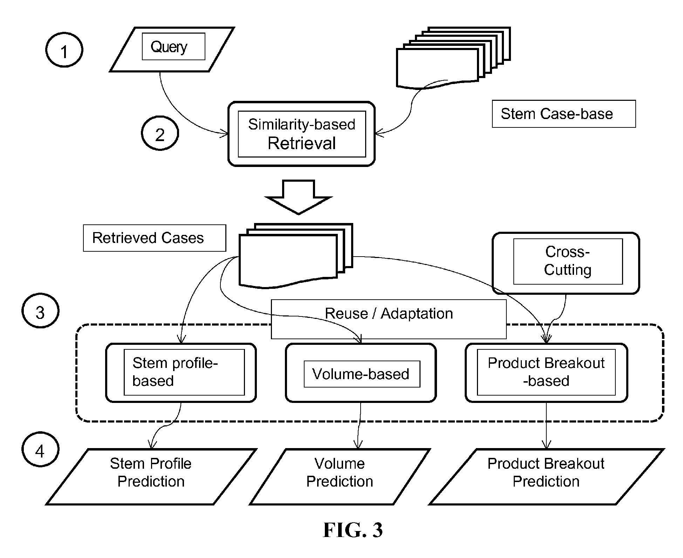

Figure 3 is a flow chart showing the individual stages of the method/system of the present invention in which the different phases of the CBR cycle are also shown.

Stage 1 of figure 3 is the step of providing a stem case base and a query data case created using the results of a 3D scan.

Stage 2 of figure 3 is the retrieval phase of the CBR cycle, in which the similarity between the query data case and the stem profiles in the case base is considered and used to seek out and retrieve the most similar cases to the query data case.

Stage 3 of Figure 3 is the reuse/adaptation phase of the CBR cycle. How this phase is carried out depends on the desired prediction task. If the task is stem profile prediction, then this stage is stem profile-based, if the task is volume prediction this stage is volume based, and if the task is product breakout prediction this stage is product breakout-based. Stage 3 for the product breakout prediction task requires a cross-cutting algorithm as shown in the diagram. Finally, stage 4 shows the four prediction tasks.

As represented in Figure 3, of the four phases in the CBR cycle the two most critical in the present system are the retrieval and reuse phases.

When defining similarity between a query case and cases in the case-base matching the taper points (i.e. diameters defining the shape/profile/ taper of the stem) is of primary importance although other factors such height can also be included in compound similarity function as described above. As highlighted in the previous section the characteristics of both the query and case-base data make standard vector based similarity unsuitable. Sequence and shape-based similarity measures similar to those mentioned above have been investigated but the most generally successful evaluated so far is a asymmetrical sequence-based Euclidean similarity measure that has been developed specifically for this task. In this application discussions are restricted to just this measure.

Since the software used to extract tree stem data can also attach reliability measures to those readings, a query can be represented as tuple of values and weights indexes

$$\{X = x_1, ... x_n, W = w_1, ..., w_n, I_Q = i_1, ..., i_n\},$$

where $I$ is the set indexes or heights at which the reading was taken. So, for instance, a reading $x_q$ taken at height $i_q$ has a reliability factor $w_q$. Importantly the set of values contained $I_q$ for a given query may not be at consecutive heights as is clear in Figure 2, as diameter readings may not have been available for certain heights. The case-base data can also be represented as a tuple but this time without any weights,

$$\{Y = x_1, ..., x_k, I_C = i_1, ..., i_k\}$$

For the cases in the case-base the set of reading heights $I_c$ is assumed to be complete sequence.

Given these representations of the query and case-base data the asymmetrical sequence-based Euclidean similarity measure (ASES) can be defined as:

$$ASES([X, W, I_Q], [Y, I_C]) = \sqrt{\frac{sum_{i=0}^{n}(w_i \times Diff(x_i, Y, I_{Qi}, I_C))}{sum_{i=0}^{n} w_i}} \qquad (2)$$

where

$$Diff(x_i, Y, I_{Qi}, I_C) = \begin{cases} x_i^2 & \text{if } I_{Qi} \notin I_C \\ (x_i - y_j)^2 & \text{otherwise} \end{cases} \qquad (3)$$

where $y_j$ is the point in $Y$ that corresponds to height $I_{qi}$.

Once a set of selected cases have been selected using the similarity measure described above under the heading "Similarity Measures" or an amalgamation of measures as described above under the heading "Retrieval" the reuse phases begins. In the present system the retrieved stem profiles are used for three main tasks, taper prediction, stem volume prediction and product break out estimation. An auxiliary function that CBR framework performs is that it can be used to smooth noisy readings produced through the scanning process.

One task in which the retrieved stem profiles are used is taper prediction. In the CBR framework of the present invention, we have the unusual situation where the information contained within the present cases is not partitioned into separate problem and solution descriptions. The taper information contained within each case also serves as its solution description. Given a query we can select the k nearest neighbours and amalgamate the taper sequences into a single solution. However, this is a difficult task and for simplicity the most similar case may be used for taper prediction.

A second task, stem volume prediction, involves an intermediate step. Given the $k$ nearest neighbours the volume of each can be calculated using the set of diameter measurements describing each of the neighbours' taper. Let $V_k s$ be the calculated volume of each of the $k$ nearest neighbours of a given query stem, $q$. We can then predict that the volume of stem $q$ is either the mean or the weight mean of each of the calculated nearest neighbour volumes as can be seen in the equation below.

$$v_q = \frac{\sum_{n=1}^{k} w_n v_n}{\sum_{n=1}^{k} w_n}$$

The weight $w_k$ of a stem is calculated based on the stem's similarity to the query stem. In the simplest case we can set each of the weights to be 1 and calculate the predicted volume of stem $q$ as being mean volume of the nearest neighbours.

Since in our prediction method we are estimating the likely value of a parameter in many applications it may be desirable to attach a confidence interval to that prediction. Instead of estimating the parameter by a single value, an interval likely to include the parameter is given. The confidence interval is used to indicate the reliability of an estimate. The confidence level determines how likely the interval is to contain the parameter. Increasing the desired confidence level will widen the confidence interval.For instance we might say that the volume of stem $q$ is 0.3 $\pm$0.05cubic metres with 95% confidence. This means that 95% confidence that the volume of q lies in the region 0.3$\pm$0,05. Given that we can calculated the mean and variance of the $k$ nearest neighbours, confidence intervals may then be calculated using known statistical techniques.

A further task is Product Breakout Estimation, which involves giving a prospective mill a sense of the likely products that can be produced from the sample stems captured by the scanning device. Given a specification of the products that a mill is interested in and the taper of a tree, a cross-cutting algorithm can be used to simulate the actions that a harvester machine would carry out in the forest. Each stem is cut into smaller sections in the forest that are easier to transport. The dimensions of each smaller section determine what product that section will be used to produce. This is called the cut to length system. A cross-cutting algorithm is the method used to determine which way a stem should be cut given the myriad of the different possible ways it can be cut into smaller sections. Each stem can be cut to produce different volumes of the desired products. A set of products and their priorities as defined by a set of weights reflecting the value of those products are given in advance and it is then necessary to search through the cutting options to find the best cutting solution.

Such cross-cutting algorithms are commonly used in forestry and the inventors have designed and developed an adaptation of one which can utilize the extra 3D information captured by TreeMetrics scanning device to give a more accurate estimate of the break out given product curvature restrictions. For each of the $k$ nearest neighbour stems, estimates of the number of product units and volumes of each product desired by the mill can be calculated. Each stem can be run through the cross-cutting algorithm and the product breakout of that stem determined. The product breakout, $pb$, of a stem can be described by a vector reflecting the volumes of each of the desired products, $pb_k = \llcorner v_{p1}, v_{p2} .... v_{pn} \lrcorner$ where $v_{p1}$ is the volume of product $p1$. The product breakout of the query stem, q, can then be estimated:

$$pb_q = \frac{\sum_{n=1}^{k} w_n pb_n}{\sum_{n=1}^{k} w_n}$$

This is similar to the volume prediction task except that the prediction is $pb$ vector containing a prediction of the volume of each product that will be produced form that stem. Each element in the $pb$ vector is the weight mean of the volume of that product in each of the $k$ nearest neighbours. Again, similar to the stem volume task these individual estimates can be used to produce as single estimate that can be qualified with a confidence interval.

Improvement in the technology available for forestry measurement means that it is now possible to collect far more information about a forest in advance of it being harvested. However, this data does not offer the complete picture and prediction systems are needed to fill in the gaps. Traditional forestry approaches to these prediction tasks were not designed with such rich data sources in mind and are ill-deposed to exploit them. The present invention presents a Case-Based Reasoning Approach to these traditional tasks, better suited to dealing with the richness of the laser scanning data and also the challenges such data poses. Results on simulated evaluations over a range of differing data quality conditions demonstrates that a CBR approach is well suited to, and performs well on, the tasks of stem taper, volume and product break out prediction.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

The invention is not limited to the embodiments hereinbefore described but may be varied in both construction and detail.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

**Claims**

1. A case-based reasoning method for predicting a complete stem profile of a tree wherein only partial stem measurements for said tree are available, the method comprising the steps of:

   a) providing a case base of measured tree stem profiles, said case base comprising a set of reading heights and a corresponding set of stem diameter readings for each measured stem,
   b) using the results of a scan of at least part of the stem of said query tree to create at least one query data case,
   c) determining the similarity between the at least one query data case and each stem profile in the case base, and
   d) selecting at least one stem profile from the case base based on its similarity with the at least one query data case to predict the complete stem profile of the query tree.

2. A case-based reasoning method for predicting the volume of a tree stem wherein only partial stem measurements for said tree are available, the method comprising the steps of:

   a) providing a case base of measured tree stem profiles, said case base comprising a set of reading heights and a corresponding set of stem diameter readings for each measured stem,
   b) using the results of a scan of at least part of the stem of said tree to create at least one query data case,
   c) determining the similarity between the at least one query data case and each stem profile in the case base, and
   d) selecting at least one stem profile based on its similarity with the at least one query data case,
   e) calculating the volume of each selected stem profile and
   f) using same to predict the volume of the query tree stem.

3. The method of claim 2 wherein step f) comprises calculating the mean volume of the selected stem profiles and using same as the predicted volume of the query tree stem.

4. The method of claim 2 further comprising:

   adding a weighting to each volume based on the level of the stem profile's similarity with the at least one query test case;
   calculating the mean weighted volume of the selected stem profiles
   and using same as the predicted volume of the query tree stem.

5. The method of any of claims 2 to 4 further comprising attaching a confidence interval to the predicted volume of the query tree stem.

6. A case-based reasoning method for estimating the product breakout of a tree stem wherein only partial stem measurements for said tree are available, the method comprising the steps of:

   a) providing a case base of measured tree stem profiles, said case base comprising a set of reading heights and a corresponding set of stem diameter readings for each measured stem,
   b) using the results of a scan of at least part of the stem of said tree to create at least one query data case,
   c) determining the similarity between the at least one query data case and each stem profile in the case base, and
   d) selecting at least one stem profile based on its similarity with the at least one query data case,
   e) applying a cross-cutting algorithm to each selected stem profile to calculate the volume of each type of desired product, and
   f) using same to estimate the product breakout of the query stem.

7. The method of claim 6 wherein the product breakout of the query stem $pb_q$ is estimated as

$$pb_q = \frac{\sum_{n=1}^{k} w_n pb_n}{\sum_{n=1}^{k} w_n}$$

where , $pb_q$ , is a vector containing the predicted volumes of each of the desired products for a query stem and $pb_n$ is a vector containing the actual product volumes for each product of the $n^{th}$ most similar stem profile. The weight $w_n$ of a stem $n$ is calculated based on the stem's similarity to the query stem.

**8.** The method of claim 6 or claim 7 further comprising attaching a confidence interval to the estimated product breakout.

**9.** The method of any preceding claim wherein the step of determining the similarity uses an asymmetrical sequence based Euclidean similarity measure.

**10.** The method of claim 9 wherein the asymmetrical sequence based Euclidean similarity measure uses a $k$ Nearest Neighbour retrieval algorithm.

**11.** The method of claim 10 further comprising:

selecting $k$ cases representing $k$ nearest neighbours, and
amalgamating the $k$ cases into a single solution.

**12.** The method of any preceding claim further comprising the step of attaching a reliability weighting to each result of the scan.

**13.** The method of claim 12 wherein query case data can be represented as:

$$\{X = x_1, .... x_n, W = w_1, ..., w_n, I_Q = i_1, ..., i_n\},$$

wherein $X$ is a set of readings $x$ from the scan results, $I_Q$ is set of heights $i$ at which the readings were taken, and $W$ is a set of reliability factors $w$ attached to said readings,
and wherein case base data can be represented as:

$$\{Y = x_1, .... x_k, I_C = i_1, ..., i_k\}$$

where Y is the set of stem diameter readings, and $I_c$ is the set of heights at which the stem diameter readings were taken.

**14.** The method of claim 13 wherein the asymmetrical sequence based Euclidean similarity measure is defined by:

$$ASES([X, W, I_Q], [Y, I_C])) = \sqrt{\frac{sum_{i=0}^{n}(w_i \times Diff(x_i, Y, I_Qi, I_C))}{sum_{i=0}^{n}w_i}}$$

where

$$Diff(x_i, Y, I_Qi, I_C) = \begin{cases} x_i^2 & \text{if } I_Qi \notin I_C \\ (x_i - y_j)^2 & \text{otherwise} \end{cases}$$

and where $y_j$ is the point in $Y$ that corresponds to height $I_{qi}$.

15. The method of any preceding claim wherein the results of a scan are the results of a three-dimensional scan.

16. A computer program comprising program instructions for causing a computer to perform one or more of the methods of Claims 1 to 15.

17. A computer implemented system for predicting a complete stem profile of a tree wherein only partial stem measurements for said tree are available, comprising:

   a) means for providing a case base of measured tree stem profiles, said case base comprising a set of reading heights and a corresponding set of stem diameter readings for each measured stem,
   b) means for using the results of a scan of at least part of the stem of said query tree to create at least one query data case,
   c) means for determining the similarity between the at least one query data case and each stem profile in the case base, and
   d) means for selecting at least one stem profile from the case base based on its similarity with the at least one query data case to predict the complete stem profile of the query tree.

18. A computer implemented system for predicting the volume of a tree stem wherein only partial stem measurements for said tree are available, the system comprising:

   a) means for providing a case base of measured tree stem profiles, said case base comprising a set of reading heights and a corresponding set of stem diameter readings for each measured stem,
   b) means for using the results of a scan of at least part of the stem of said tree to create at least one query data case,
   c) means for determining the similarity between the at least one query data case and each stem profile in the case base, and
   d) means for selecting at least one stem profile based on its similarity with the at least one query data case,
   e) means for calculating the volume of each selected stem profile and
   f) means for using same to predict the volume of the query tree stem.

19. A computer implemented system for estimating the product breakout of a tree stem wherein only partial stem measurements for said tree are available, the system comprising:

   a) means for providing a case base of measured tree stem profiles, said case base comprising a set of reading heights and a corresponding set of stem diameter readings for each measured stem,
   b) means for using the results of a scan of at least part of the stem of said tree to create at least one query data case,
   c) means for determining the similarity between the at least one query data case and each stem profile in the case base, and
   d) means for selecting at least one stem profile based on its similarity with the at least one query data case,
   e) means for applying a cross-cutting algorithm to each selected stem profile to calculate the volume of each type of desired product, and
   f) means for using same to estimate the product breakout of the query stem.

FIG. 1

**FIG. 2**

**FIG. 3**

Europäisches
Patentamt

European
Patent Office

Office européen
des brevets

# EUROPEAN SEARCH REPORT

Application Number

EP 08 15 8280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NUGENT C ET AL: "Applying case-based reasoning in a laser scanner forest inventory system" EURO 2007. 22ND EUROPEAN CONFERENCE ON OPERATIONAL RESEARCH, PRAGUE JULY 8-11, 2007,, 8 July 2007 (2007-07-08), page 173, XP009107615 item 3 - | 1-19 | INV. G06K9/62 A01G23/00 G06Q10/00 G06N5/00 |
| A | DANIEL CHARLEBOIS ET AL: "Case-Based reasoning in an Intelligent Information System for Forestry" KNOWLEDGE-BASED ARTIFICIAL INTELLIGENCE SYSTEMS IN AEROSPACE AND INDUSTRY : 5-6 APRIL 1994, ORLANDO, FLORIDA (SPIE PROCEEDINGS SERIES; 2244),, vol. 2244, 5 April 1994 (1994-04-05), pages 64-74, XP009107704 ISBN: 978-0-8194-1548-6 * abstract * | 1-19 | |
| A | HAUFMANN H ET AL: "Environmental Mapping and Analysis Program Based on the Use of the Airborne Reflective Emissive Spectrometer (ARES)" PRESENTED AT THE 3RD EARSEL WORKSHOP ON IMAGING SPECTROSCOPY, OBERPFAFFENHOFEN, MAY 13-16 2003,, [Online] 13 May 2003 (2003-05-13), pages 15-24, XP009107702 Retrieved from the Internet: URL:http://las.physik.uni-oldenburg.de/con ferences/imaging-spectroscopy-2 003/papers/sensors_and_missions/kaufmann.p df> Table 1 -/-- | 1-19 | TECHNICAL FIELDS SEARCHED (IPC) G06K G06Q A01G G06N |

The present search report has been drawn up for all claims

| Place of search | Date of completion of the search | Examiner |
|---|---|---|
| Munich | 24 October 2008 | Rimassa, Simone |

EPO FORM 1503 03.82 (P04C01)

Europäisches
Patentamt
European
Patent Office
Office européen
des brevets

# EUROPEAN SEARCH REPORT

Application Number

EP 08 15 8280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | A. BIENERT; S. SCHELLER; E. KEANE; F. MOHAN; C. NUGENT: "Tree detection and diameter estimation by analysis of forest terrestrial laserscanner points clouds" ISPRS WORKSHOP ON LASER SCANNING 2007, 12 September 2007 (2007-09-12), XP009107731 section 7. Conclusion * abstract * | 1-19 | |
| T | WO 2008/117263 A (TREEMETRICS LTD [IE]; MOHAN FERGAL [IE]) 2 October 2008 (2008-10-02) * the whole document * | 1-9 | |
| | | | TECHNICAL FIELDS SEARCHED (IPC) |

The present search report has been drawn up for all claims

| Place of search | Date of completion of the search | Examiner |
|---|---|---|
| Munich | 24 October 2008 | Rimassa, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 8280

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2008

| Patent document cited in search report | Publication date | Patent family member(s) | Publication date |
|---|---|---|---|
| WO 2008117263 A | 02-10-2008 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7212670 B1
- US 7013235 B2
- US 20070291994 A1
- US 20080046184 A1